(19) Europäisches Patentamt
European Patent Office
Office européen des brevets

(11) **EP 3 524 803 B1**

(12) **EUROPEAN PATENT SPECIFICATION**

(45) Date of publication and mention
of the grant of the patent:
**01.09.2021 Bulletin 2021/35**

(51) Int Cl.:
*F02D 41/00* $^{(2006.01)}$     *F02D 13/06* $^{(2006.01)}$

(21) Application number: **19155692.7**

(22) Date of filing: **06.02.2019**

(54) **ENGINE CONTROLLER**

MOTORSTEUERGERÄT

ORGANE DE COMMANDE DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.02.2018 JP 2018022029**

(43) Date of publication of application:
**14.08.2019 Bulletin 2019/33**

(73) Proprietor: **TOYOTA JIDOSHA KABUSHIKI
KAISHA
Aichi-ken 471-8571 (JP)**

(72) Inventor: **NAKANO, Tomohiro
TOYOTA-SHI, AICHI-KEN, 471-8571 (JP)**

(74) Representative: **Cabinet Beau de Loménie
158, rue de l'Université
75340 Paris Cedex 07 (FR)**

(56) References cited:
**JP-A- H10 103 097    US-A1- 2003 213 466
US-A1- 2016 053 697    US-A1- 2016 215 705
US-A1- 2017 356 372**

**Description**

BACKGROUND

The present disclosure relates to an engine controller that variably controls a combustion cylinder ratio.

U.S. Patent No. 9200575 discloses a technique for performing an intermittent combustion operation with cylinders intermittently deactivated and variably controlling the combustion cylinder ratio of an engine, which is the ratio of the number of combustion cylinders to the total of the number of combustion cylinders and the number of deactivated cylinders, by changing the frequency of the cylinder deactivation during the intermittent combustion operation. U.S. Patent No. 9200575 also discloses that various combustion cylinder ratios can be achieved by dynamically changing deactivated cylinders instead of fixing deactivated cylinders to particular cylinders.

Japanese Laid-Open Patent Publication No. 2005-105869 and US Patent Application Publication US2016/053697 A1 disclose stopping the operation for opening and closing the intake and exhaust valves of a cylinder in which combustion is deactivated during a reduced-cylinder operation.

During the intermittent combustion operation, combustion and resumption of the combustion are repeated, thereby increasing the fluctuation of the engine speed. Further, in some cases, when the combustion cylinder ratio is changed to alter the frequency of cylinder deactivation, the engine output changes so that the rotation speed greatly fluctuates. Thus, during the execution of the variable control of the combustion cylinder ratio, the engine speed fluctuation increases. This may deteriorate the drivability.

SUMMARY

It is an object of the present disclosure to provide an engine controller that effectively limits increases in the engine speed fluctuation that are caused when the combustion cylinder ratio is variably controlled.

An engine controller according to one aspect is configured to control an engine. The engine includes cylinders, an intake passage through which intake air flowing into the cylinders flows, a throttle valve arranged in the intake passage, an intake valve arranged in each of the cylinders, and a valve stopping mechanism capable of stopping an operation for opening and closing the intake valve in each of the cylinders. N and M are integers greater than or equal to 1. The engine controller includes a combustion cylinder ratio control unit, a valve stopping control unit, and a valve stopping control unit. The combustion cylinder ratio control unit is configured to perform an intermittent combustion operation with a combustion cylinder ratio set to N/(N + M) by repeating cylinder deactivation in a pattern in which combustion is consecutively performed in N cylinders before combustion is consecutively deactivated in M cylinders, and variably control the combustion cylinder ratio so that a value of at least one of N and M changes. The valve stopping control unit is configured to control the valve stopping mechanism so as to stop the operation for opening and closing the intake valve of a cylinder in which combustion is deactivated in the intermittent combustion operation. The throttle control unit is configured to adjust, in a case in which the combustion cylinder ratio is changed by the combustion cylinder ratio control unit, a throttle open degree that is an open degree of the throttle valve so that the open degree decreases when the value of the combustion cylinder ratio is increased by the change and the open degree increases when the value of the combustion cylinder ratio is decreased by the change. The throttle control unit is configured to start adjusting the throttle open degree in accordance with the change of the combustion cylinder ratio at an earlier timing when the value of the combustion cylinder ratio is increased by the change than when the value of the combustion cylinder ratio is decreased by the change.

When the torque generated through the combustion of each cylinder is constant, the engine output during the intermittent combustion operation becomes larger as the cylinder deactivation frequency becomes lower and becomes smaller as the cylinder deactivation frequency becomes higher. Thus, when the cylinder deactivation is irregularly performed, the speed fluctuation of the engine increases. In the above-described engine controller, when the intermittent combustion operation is performed at a constant combustion cylinder ratio, cylinder deactivation is performed at a constant frequency. This reduces the speed fluctuation during the intermittent combustion operation.

Further, in a case in which the torque generated by each combustion cylinder and the engine rotation speed are constant, the engine output becomes smaller as the combustion cylinder ratio becomes smaller, and the engine output becomes larger as the combustion cylinder ratio becomes larger. When the above-described engine controller of the present embodiment decreases the combustion cylinder ratio, the above-described engine controller increases the large throttle open degree to increase the torque generated in each combustion cylinder. Further, when the engine controller increases the combustion cylinder ratio, the engine controller decreases the throttle open degree to decrease the torque generated in each combustion cylinder. Thus, the speed fluctuation of the engine can be reduced when the combustion cylinder ratio is changed.

The torque generated in each combustion cylinder becomes larger as the amount of air drawn into the cylinder in the intake stroke (cylinder inflow air amount) becomes larger. In a case in which the engine rotation speed is constant, the cylinder inflow air amount becomes larger as the pressure of intake air (hereinafter referred to as the intake manifold pressure) becomes higher at the portion of the intake passage located downstream of the throttle valve, and the cylinder inflow air amount becomes smaller as the intake manifold pressure becomes lower. When the intake valve of each cylinder is closed, the portion of the intake passage located downstream of the throttle valve is a closed space. Thus, when the operation for opening and closing the intake valve is not performed, the intake manifold pressure can be increased but cannot be decreased. The above-described engine controller has a period during which the operation for opening and closing the intake valve of a cylinder in which combustion is deactivated and thus the intake manifold pressure cannot be decreased. Thus, it takes a longer time for the torque generated in each combustion cylinder to be decreased by a decrease of the throttle open degree when the combustion cylinder ratio increases than for the torque generated in each combustion cylinder to be increased by an increase of the throttle open degree when the combustion cylinder ratio decreases.

Thus, the throttle control unit of the above-described engine controller is configured to start the adjustment of the throttle open degree in accordance with the change of the combustion cylinder ratio at an earlier timing when the value of the combustion cylinder ratio is increased by the change than when the value of the combustion cylinder ratio is decreased by the change. Accordingly, the torque generated in each combustion cylinder corresponding to the change of the combustion cylinder ratio can be properly adjusted.

Thus, the above-described engine controller effectively limits increases in the engine speed fluctuation that are caused when the combustion cylinder ratio is variably controlled.

As described above, the torque generated in each combustion cylinder is determined by the cylinder inflow air amount. In some cases, engine control involves the use of the engine load ratio as an index value of the cylinder inflow air amount. The engine load ratio represents the ratio of the current cylinder inflow air amount to the cylinder inflow air amount when the throttle valve is fully open at the current engine rotation speed. The engine output is proportional to the product of the torque and the rotation speed. Thus, in a case in which the engine rotation speed is constant, when the torque generated in each combustion cylinder is set to be inversely proportional to the combustion cylinder ratio, the engine output is kept constant even if the combustion cylinder ratio changes. Thus, the throttle control unit calculates the required load ratio, which is the required value of the engine load ratio in accordance with the combustion cylinder ratio, and controls the throttle open degree in accordance with the required load ratio, allowing the throttle open degree to be controlled so as to reduce changes in the engine output that result from the change of the combustion cylinder ratio.

In such a case, when the combustion cylinder ratio is changed by the combustion cylinder ratio control unit, the timing of starting the adjustment of the throttle open degree becomes earlier as the timing of switching the value of the combustion cylinder ratio used to calculate the required load ratio from the value prior to the change to the value subsequent to the change becomes earlier. Thus, the timing of switching the value of the combustion cylinder ratio, which is used for calculation of the required load ratio, from the value prior to the change to the value subsequent to the change simply needs to be earlier when the value of the combustion cylinder ratio is increased by the change than when the value of the combustion cylinder ratio is decreased by the change.

Such an adjustment of the throttle open degree requires a highly responsive throttle open degree control in order to properly reduce the fluctuation of the engine speed when the combustion cylinder ratio is changed. When the responsiveness of a normal throttle open degree control is increased to adjust the torque of the engine, the torque may fluctuate due to hunting that results from excessive response and sudden change of the cylinder inflow air amount. To cope with this problem, the throttle control unit of the above-described engine controller is configured to set a higher feedback gain in a feedback control of the throttle open degree when adjusting the throttle valve in accordance with the change of the combustion cylinder ratio than when not adjusting the throttle valve in accordance with the change of the combustion cylinder ratio.

Other aspects and advantages of the present invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferable embodiments together with the accompanying drawings in which:

Fig. 1 is a schematic diagram of an engine controller according to an embodiment;
Fig. 2 is a block diagram illustrating the flow of processes of variably controlling a combustion cylinder ratio that are executed by the engine controller of Fig. 1;
Fig. 3 is a graph illustrating the relationship of a target combustion cylinder ratio with an engine rotation speed and with an all-cylinder combustion required load ratio that are set by the engine controller of Fig. 1;
Fig. 4 is a flowchart illustrating a required load ratio setting routine executed by the engine controller of Fig. 1;
Fig. 5 is a flowchart illustrating a throttle control routine executed by the engine controller of Fig. 1;

Fig. 6 is a time chart illustrating a control mode performed when the combustion cylinder ratio decreases in the engine controller of Fig. 1; and

Fig. 7 is a time chart illustrating a control mode performed when the combustion cylinder ratio increases in the engine controller of Fig. 1.

DETAILED DESCRIPTION

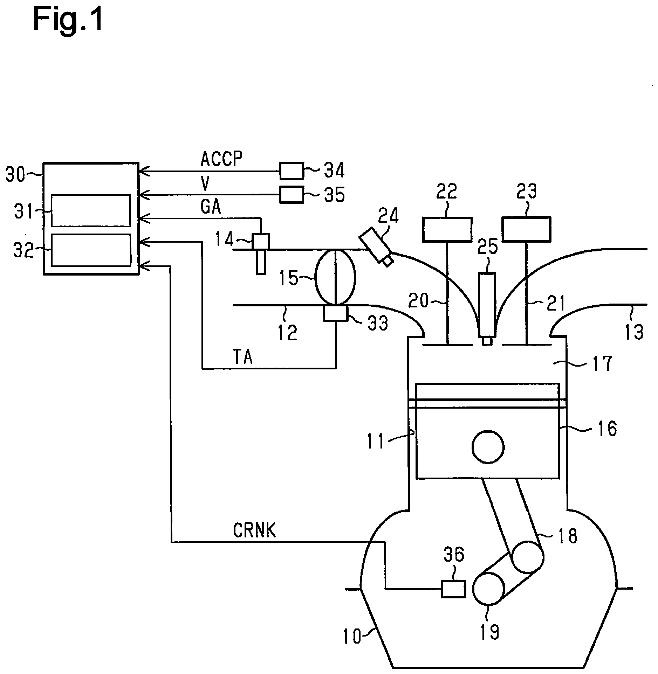

An engine controller according to an embodiment will now be described in detail with reference to Figs. 1 to 7.

Fig. 1 illustrates an engine 10 configured as an onboard inline-four engine provided with four cylinders 11, one of which is shown in Fig. 1. In the following description, the four cylinders 11 are referred to as a cylinder #1, a cylinder #2, a cylinder #3, and a cylinder #4 to distinguish one from another. In the cylinders 11 of the engine 10, ignition is performed in the order of the cylinder #1, the cylinder #3, the cylinder #4, and the cylinder #2.

The engine 10 includes an intake passage 12 and an exhaust passage 13. Intake air flowing into each cylinder 11 flows through the intake passage 12. Exhaust gas discharged out of each cylinder 11 flows through the exhaust passage 13. The intake passage 12 includes an airflow meter 14 that detects the flow rate of intake air flowing into the intake passage 12 (intake air amount GA). The intake passage 12 also includes a throttle valve 15 that adjusts the intake air amount GA.

Each cylinder 11 of the engine 10 includes a piston 16 in a manner allowing for reciprocation of the piston 16. Each cylinder 11 further includes a combustion chamber 17 defined by the piston 16. The piston 16 of each cylinder 11 is coupled to a crankshaft 19, which is an output shaft of the engine 10, by a connecting rod 18 that converts reciprocating movement of the piston 16 into rotating movement.

Each cylinder 11 of the engine 10 also includes an intake valve 20 and an exhaust valve 21. When the intake valve 20 opens during the intake stroke, intake air is drawn into the combustion chamber 17 of each cylinder 11 from the intake passage 12. When the exhaust valve 21 opens during the exhaust stroke, exhaust gas is discharged out of the combustion chamber 17 to the exhaust passage 13. The engine 10 further includes an intake-side valve stopping mechanism 22 and an exhaust-side valve stopping mechanism 23. The intake-side valve stopping mechanism 22 can stop the operation for opening and closing the intake valve 20 in each cylinder. The exhaust-side valve stopping mechanism 23 can stop the operation for opening and closing the exhaust valve 21 in each cylinder.

Additionally, each cylinder 11 of the engine 10 includes a fuel injection valve 24 and an ignition plug 25. The fuel injection valve 24 injects fuel into the intake air drawn into the combustion chamber 17. The ignition plug 25 uses spark discharge to ignite the mixture of the intake air and fuel drawn into the combustion chamber 17.

The above-described engine 10 is controlled by an engine controller 30. The engine controller 30 includes a calculation processing circuit 31 that performs a calculation process for engine control and a storage device 32 that stores programs and data for engine control. The calculation processing circuit 31 performs various types of processes for engine control by reading and executing the programs stored in the storage device 32.

In addition to the airflow meter 14, a throttle sensor 33, an accelerator pedal sensor 34, and a vehicle-speed sensor 35 are connected to the engine controller 30. The throttle sensor 33 detects the open degree of the throttle valve 15 (throttle open degree TA), the accelerator pedal sensor 34 detects the depression amount of an accelerator pedal by the driver (accelerator operation amount ACCP), and the vehicle-speed sensor 35 detects the travelling speed of the vehicle (vehicle speed V). Further, a crank angle sensor 36 that outputs a pulsed crank signal CRNK in accordance with rotation of the crankshaft 19 is connected to the engine controller 30. The engine controller 30 calculates an engine rotation speed NE based on the crank signal CRNK. In addition, the engine controller 30 calculates a required torque TREQ, which is a required value of engine torque, based on the accelerator operation amount ACCP and the engine rotation speed NE.

As part of the engine control, the engine controller 30 performs a combustion cylinder ratio variable control for setting the combustion cylinder ratio of the engine 10 to be variable. The combustion cylinder ratio is the ratio of the number of cylinders in which combustion is performed (combustion cylinders) to the total of the number of combustion cylinders and the number of cylinders in which combustion is deactivated (deactivated cylinders). In an all-cylinder combustion operation for performing combustion in all the cylinders entering the combustion stroke, the combustion cylinder ratio is 100% (100% = 1). In an intermittent deactivation operation for deactivating combustion in some of the cylinders, the combustion cylinder ratio is a value less than 100%.

In the all-cylinder combustion operation, the fuel injection of the fuel injection valve 24 and the spark discharge of the ignition plug 25 are performed in each combustion cycle repeatedly in all the cylinders #1 to #4. In the intermittent deactivation operation, while a cylinder is not subject to intermittent deactivation, the fuel injection of the fuel injection valve 24 and the spark discharge of the ignition plug 25 in the cylinder are performed in each combustion cycle repeatedly. When a cylinder is subject to combustion deactivation, the fuel injection of the fuel injection valve 24 and the spark discharge of the ignition plug 25 in the cylinder are stopped in one combustion cycle. When the intermittent deactivation operation is performed, the operation for opening and closing the intake valve 20 and the exhaust valve 21 of a cylinder subject to combustion deactivation is stopped by the valve stopping mechanisms 22 and 23.

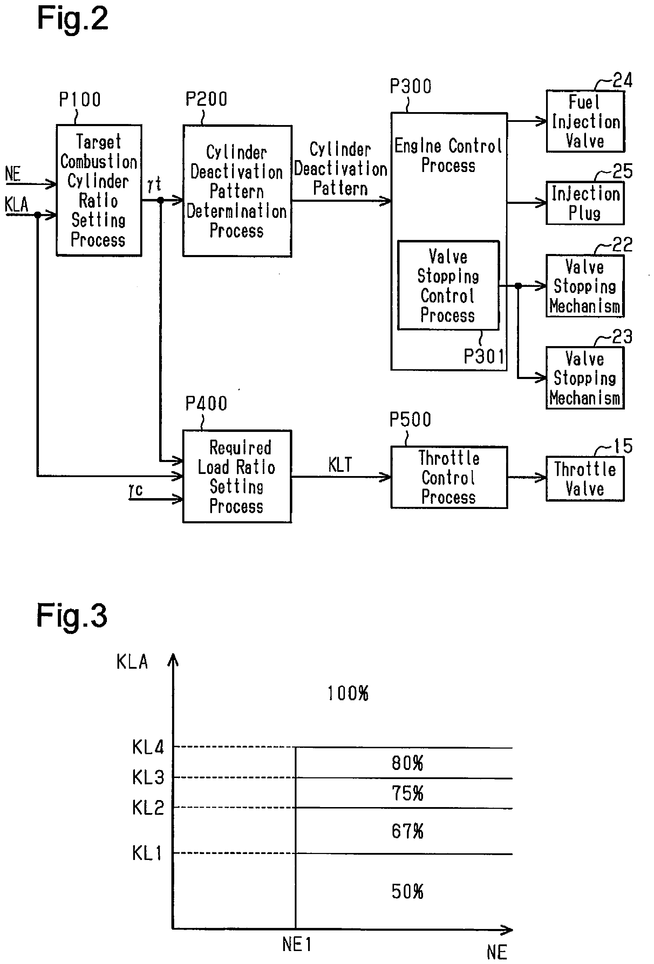

Fig. 2 shows the flow of processes of the combustion cylinder ratio variable control performed by the engine controller 30. As shown in Fig. 2, when performing the combustion cylinder ratio variable control, the engine controller 30 executes a target combustion cylinder ratio setting process P100, a cylinder deactivation pattern determination process P200, an engine control process P300, a required load ratio setting process P400, and a throttle control process P500.

Target Combustion Cylinder Ratio Setting Process

In the target combustion cylinder ratio setting process P100, a target combustion cylinder ratio yt, which is the target value of the combustion cylinder ratio, is determined based on an all-cylinder combustion required load ratio KLA and the engine rotation speed NE. The all-cylinder combustion required load ratio KLA represents an engine load ratio KL necessary for generating torque by an amount of required torque when the engine 10 performs the all-cylinder combustion operation. The value of the all-cylinder combustion required load ratio KLA is calculated based on the engine rotation speed NE and the required torque TREQ. The engine load ratio KL represents the ratio of a cylinder inflow air amount to a maximum cylinder inflow air amount. The cylinder inflow air amount is an intake air amount per cycle of one cylinder. The maximum cylinder inflow air amount is a cylinder inflow air amount when the open degree of the throttle valve 15 is the maximum open degree.

Fig. 3 shows the mode of setting the target combustion cylinder ratio $\gamma t$ in the present embodiment. In the present embodiment, the target combustion cylinder ratio $\gamma t$ is set to any of 0%, 50%, 67%, 75%, 80%, and 100%. As shown in Fig. 3, the value of the target combustion cylinder ratio $\gamma t$ is set to 100% in a region where the engine rotation speed NE is less than or equal to a preset value NE1 regardless of the all-cylinder combustion required load ratio KLA. The value of the target combustion cylinder ratio $\gamma t$ is variably set in a range from 50% to 100% in a region where the engine rotation speed NE exceeds the preset value NE1 in accordance with the all-cylinder combustion required load ratio KLA. More specifically, the target combustion cylinder ratio $\gamma t$ in the region where the engine rotation speed NE exceeds the preset value NE1 is set to 50% when the all-cylinder combustion required load ratio KLA is less than the preset value NE1 and set to 67% when the all-cylinder combustion required load ratio KLA is greater than or equal to the preset value NE1 and less than a preset value KL2 (KL2 > KL1). The target combustion cylinder ratio $\gamma t$ in the region where the engine rotation speed NE exceeds the preset value NE1 is set to 75% when the all-cylinder combustion required load ratio KLA is greater than or equal to the preset value KL2 and less than a preset value KL3 (KL3 > KL2), set to 80% when the all-cylinder combustion required load ratio KLA is greater than or equal to the preset value KL3 and less than a preset value KL4 (KL4 > KL3), and set to 100% when the all-cylinder combustion required load ratio KLA is greater than or equal to the preset value KL4.

When the speed of the vehicle is reduced, fuel cut-off is performed to temporarily stop the combustion of all the cylinders. When the fuel cut-off is performed, the value of the target combustion cylinder ratio $\gamma t$ is set to 0%.

Cylinder Deactivation Pattern Determination Process

In the cylinder deactivation pattern determination process P200, a cylinder deactivation pattern that is to be performed subsequent to a cylinder deactivation pattern that is currently being performed is determined in accordance with the target combustion cylinder ratio $\gamma t$. Table 1 shows the order of combustion and deactivation of the cylinders in cylinder deactivation patterns corresponding to the target combustion cylinder ratios $\gamma t$ of 0%, 50%, 67%, 75%, 80%, and 100%. The cylinder deactivation pattern corresponding to each of the target combustion cylinder ratios $\gamma t$ of 50%, 67%, 75%, and 80%, which are set when the intermittent combustion operation is performed, is a pattern in which combustion is consecutively performed in N cylinders in the order of cylinders entering the combustion stroke before the combustion of one cylinder 11 is deactivated.

EP 3 524 803 B1

[Table 1]

| Target Combustion Cylinder Ratio | Deactivation (-)/Combustion(○) | | | | | | | | | | | | | | | | | | | | | | |
|---|---|---|---|---|---|---|---|---|---|---|---|---|---|---|---|---|---|---|---|---|---|---|---|
| | #1 | #3 | #4 | #2 | #1 | #3 | #4 | #2 | #1 | #3 | #4 | #2 | #1 | #3 | #4 | #2 | #1 | #3 | #4 | #2 | #1 | #3 | ⋯ |
| 0% | - | - | - | - | - | - | - | - | - | - | - | - | - | - | - | - | - | - | - | - | - | - | ⋯ |
| 50% | ○ | - | ○ | - | ○ | - | ○ | - | ○ | - | ○ | - | ○ | - | ○ | - | ○ | - | ○ | - | ○ | - | ⋯ |
| 67% | ○ | ○ | - | ○ | ○ | - | ○ | ○ | - | ○ | ○ | - | ○ | ○ | - | ○ | ○ | - | ○ | ○ | - | ○ | ⋯ |
| 75% | ○ | ○ | ○ | - | ○ | ○ | ○ | - | ○ | ○ | ○ | - | ○ | ○ | ○ | - | ○ | ○ | ○ | - | ○ | ○ | ⋯ |
| 80% | ○ | ○ | ○ | ○ | - | ○ | ○ | ○ | ○ | - | ○ | ○ | ○ | ○ | - | ○ | ○ | ○ | ○ | - | ○ | ○ | ⋯ |
| 100% | ○ | ○ | ○ | ○ | ○ | ○ | ○ | ○ | ○ | ○ | ○ | ○ | ○ | ○ | ○ | ○ | ○ | ○ | ○ | ○ | ○ | ○ | ⋯ |

When the cylinder deactivation pattern is switched, a cylinder deactivation pattern prior to the switching is completed before a cylinder deactivation pattern subsequent to the switching is started from the beginning. That is, when the value of the target combustion cylinder ratio $\gamma t$ changes, the cylinder deactivation pattern corresponding to the value of the target combustion cylinder ratio $\gamma t$ prior to the change is completed before the cylinder deactivation pattern corresponding to the value of the target combustion cylinder ratio $\gamma t$ subsequent to the change is started from the beginning.

As described above, in the present embodiment, when the target combustion cylinder ratio $\gamma t$ is maintained at any one of 50%, 67%, 75%, and 80%, the intermittent combustion operation is performed by repeating the pattern in which combustion is consecutively performed in N cylinders in the order of cylinders entering the combustion stroke before the combustion of one cylinder 11 is deactivated. In other words, the intermittent combustion operation is performed by repeating cylinder deactivation at a certain interval.

Engine Control Process

In the engine control process P300, the fuel injection valve 24 and the ignition plug 25 are controlled so that combustion and deactivation are performed in each cylinder in accordance with the cylinder deactivation pattern determined in the cylinder deactivation pattern determination process P200. Further, the engine control process P300 includes a valve stopping control process P301. In the valve stopping control process P301, the valve stopping mechanisms 22 and 23, which stop the operation for opening and closing the intake valve 20 and the exhaust valve 21 of a cylinder subject to combustion deactivation, are controlled in accordance with the cylinder deactivation pattern. This stops the fuel injection, the ignition, and the operation for opening and closing the intake valve 20 and the exhaust valve 21 in the combustion cycle in the cylinder subject to combustion deactivation of the combustion cycle in accordance with the cylinder deactivation pattern.

Required Load Ratio Setting Process

In the required load ratio setting process P400, the value of a required load ratio KLT, which is the required value of the engine load ratio KL, is set.

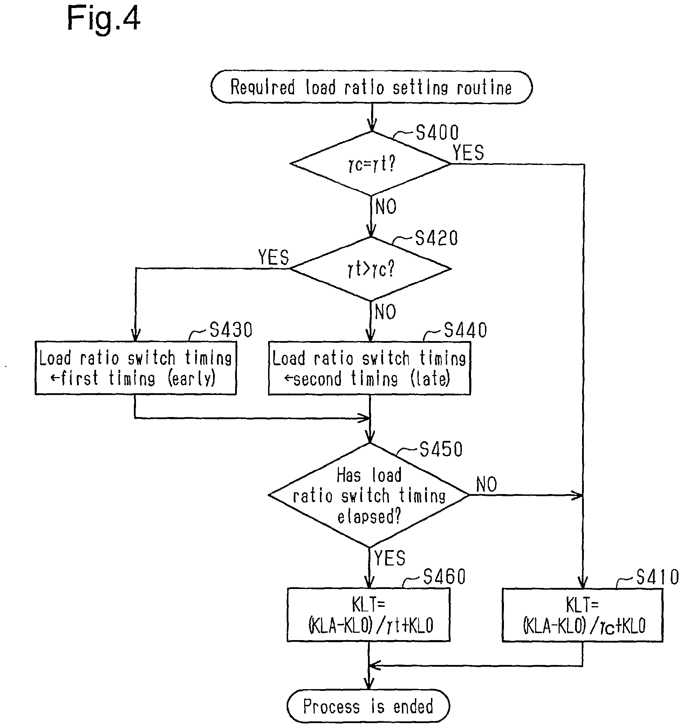

Fig. 4 shows the flowchart of a required load ratio setting routine executed by the engine controller 30 in the required load ratio setting process P400. While the engine 10 is running, the engine controller 30 repeatedly executes the process of this routine in preset control cycles.

When the process of the required load ratio setting routine is started, it is first determined in step S400 whether or not the target combustion cylinder ratio $\gamma t$ is the same as a current combustion cylinder ratio $\gamma c$. When the target combustion cylinder ratio $\gamma t$ is not the same as the current combustion cylinder ratio $\gamma c$, the currently-performed cylinder deactivation pattern is ended before a combustion cylinder ratio $\gamma$ is changed.

When the current combustion cylinder ratio $\gamma c$ is the same as the target combustion cylinder ratio $\gamma t$ (S400: YES), that is, when the combustion cylinder ratio $\gamma$ is not changed, the process is advanced to step S410. In step S410, the value of the required load ratio KLT is calculated as a value that satisfies the relationship of equation (1) for the all-cylinder combustion required load ratio KLA, the current combustion cylinder ratio $\gamma c$, and a zero torque load ratio KL0. Then, the process of the required load ratio setting routine is ended. The zero torque load ratio KL0 represents the value of the engine load ratio KL when the output torque of the engine 10 is 0. The value of the required load ratio KLT that satisfies the relationship of equation (1) is the value of the engine load ratio KL necessary to obtain the same engine output when the intermittent combustion operation is performed with the combustion cylinder ratio $\gamma$ set to the current combustion cylinder ratio $\gamma c$ as when the all-cylinder combustion operation is performed with the engine load ratio KL set to the all-cylinder combustion required load ratio KLA.

$$ \mathrm{KLT} = \frac{(\mathrm{KLA} - \mathrm{KL0})}{\gamma c} + \mathrm{KL0} \qquad \cdots (1) $$

When the current combustion cylinder ratio $\gamma c$ is not the same as the target combustion cylinder ratio $\gamma t$ (S400: NO), that is, when the combustion cylinder ratio $\gamma$ is changed, the process is advanced to step S420. When the process is advanced to step S420, it is determined whether or not the target combustion cylinder ratio $\gamma t$ is greater than the current combustion cylinder ratio $\gamma c$. When the target combustion cylinder ratio $\gamma t$ is greater than the current combustion cylinder ratio $\gamma c$, the currently-performed cylinder deactivation pattern is ended before the combustion cylinder ratio $\gamma$ is changed to increase. When the target combustion cylinder ratio $\gamma t$ is less than or equal to the current combustion cylinder ratio $\gamma c$, the currently-performed cylinder deactivation pattern is ended before the combustion cylinder ratio $\gamma$ is changed to decrease.

When the target combustion cylinder ratio $\gamma$t is greater than the current combustion cylinder ratio $\gamma$c (S420: YES), a load ratio switch timing is set to a predetermined first timing in step S430. Then, the process is advanced to step S450. In the present embodiment, the first timing is set to the intake top dead center of a cylinder of which the ignition order is the second from the final cylinder in the currently-performed cylinder deactivation pattern. When the target combustion cylinder ratio $\gamma$t is less than or equal to the current combustion cylinder ratio $\gamma$c (S420: NO), the load ratio switch timing is set to a predetermined second timing, which is later than the first timing, in step S440. Then, the process is advanced to step S450. In the present embodiment, the second timing is set to the intake top dead center of a cylinder of which the ignition order is the first from the final cylinder in the currently-performed cylinder deactivation pattern.

When the process is advanced to step S450, it is determined in step S450 whether or not the load ratio switch timing has elapsed based on the crank signal CRNK. When the load ratio switch timing has not elapsed (S450: NO), the process is advanced to the above-described step S410 so that the value of the required load ratio KLT is calculated as the value that satisfies the relationship of the above-described equation (1). After the currently-performed cylinder deactivation pattern is ended, the combustion cylinder ratio $\gamma$ is changed. The value of the current combustion cylinder ratio $\gamma$c represents the combustion cylinder ratio $\gamma$ prior to the change. Thus, before the load ratio switch timing has elapsed, the required load ratio KLT is calculated as a value corresponding to the combustion cylinder ratio $\gamma$ prior to the change.

When the load ratio switch timing has elapsed (S450: YES), the process is advanced to step S460. In step S460, the value of the required load ratio KLT is calculated as a value that satisfies the relationship of equation (2). Then, the process of the required load ratio setting routine is ended. The value of the required load ratio KLT that satisfies the relationship of equation (2) is the value of the engine load ratio KL necessary to obtain the same engine output when the intermittent combustion operation is performed with the combustion cylinder ratio y set to the target combustion cylinder ratio yt as when the all-cylinder combustion operation is performed with the engine load ratio KL set to the all-cylinder combustion required load ratio KLA.

$$KLT = \frac{(KLA - KL0)}{\gamma t} + KL0 \qquad \cdots (2)$$

Even in this case, after the currently-performed cylinder deactivation pattern is ended, the target combustion cylinder ratio $\gamma$t is changed. The target combustion cylinder ratio $\gamma$t represents the combustion cylinder ratio $\gamma$ subsequent to the change. Thus, after the load ratio switch timing has elapsed, the required load ratio KLT is calculated as a value corresponding to the combustion cylinder ratio $\gamma$ subsequent to the change.

As is obvious from equations (1) and (2), when the combustion cylinder ratio $\gamma$ is changed, the calculated value of the required load ratio KLT in the required load ratio setting routine decreases in a case in which the value of the combustion cylinder ratio $\gamma$ is increased by the change. Further, the value of the required load ratio KLT increases when the value of the combustion cylinder ratio $\gamma$ is decreased by the change of the combustion cylinder ratio $\gamma$.

Throttle Control Process

In the throttle control process P500, the throttle open degree TA is controlled so that the engine load ratio KL approaches the required load ratio KLT.

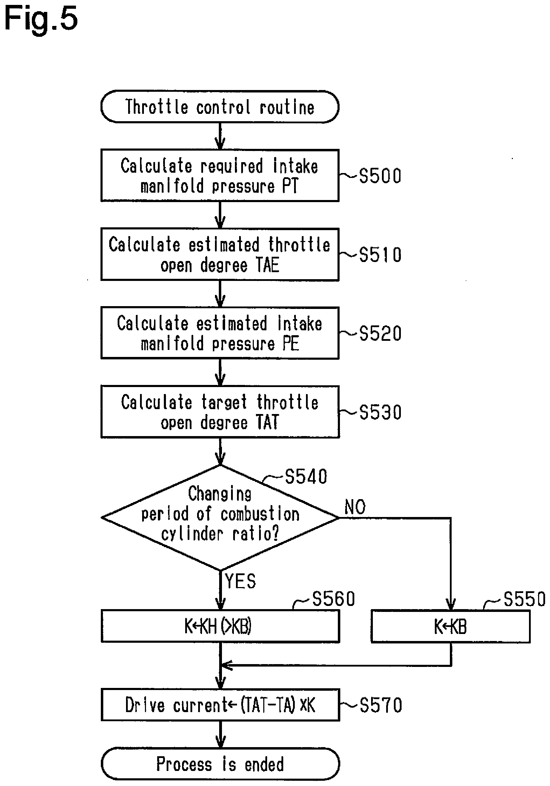

Fig. 5 shows the flowchart of a throttle control routine executed by the engine controller 30 in the throttle control process P500. While the engine 10 is running, the engine controller 30 repeatedly executes the process of this routine in preset control cycles.

When the process of the throttle control routine is started, a required intake manifold pressure PT is calculated in step S500 from the engine rotation speed NE and the required load ratio KLT. The intake manifold pressure refers to the pressure of intake air at a portion of the intake passage 12 located downstream of the throttle valve 15. The intake manifold pressure necessary to set the engine load ratio KL to the required load ratio KLT is calculated as the value of the required intake manifold pressure PT. When the engine rotation speed NE is constant, an increase in the intake manifold pressure increases the engine load ratio KL. Thus, when the value of the required load ratio KLT is increased in a state in which the engine rotation speed NE is constant, the value of the required intake manifold pressure PT is calculated as a value that increases in accordance with the increase in the required load ratio KLT.

Subsequently, in step S510, an estimated throttle open degree TAE is calculated. The estimated throttle open degree TAE is an estimated value of the throttle open degree TA after a predetermined time has elapsed. The value of the estimated throttle open degree TAE is calculated using a throttle model, which is a physical model of the behavior of the throttle valve 15. Then, in step S520, an estimated intake manifold pressure PE, which is the estimated value of the intake manifold pressure after the predetermined time has elapsed, is calculated from the estimated throttle open degree TAE.

Further, in step S530, the engine rotation speed NE, the estimated intake manifold pressure PE, and the required intake manifold pressure PT are used to calculate a target throttle open degree TAT, which is the target value of the throttle open degree TA. When the engine rotation speed NE is constant, the intake manifold pressure becomes higher (approaches the atmospheric pressure) as the throttle open degree TA becomes larger. Thus, when the required intake manifold pressure PT is increased in a state in which the engine rotation speed NE is constant, the value of the target throttle open degree TAT is basically calculated as a value that increases in accordance with the increase in the required intake manifold pressure PT. A delay in movement of intake air causes a response delay between a change in the throttle opening degree TA and the corresponding change in the intake manifold pressure. Thus, the target throttle open degree TAT is calculated by correcting the base value of the target throttle open degree TAT, which is calculated based on the engine rotation speed NE and the required intake manifold pressure PT, by an amount corresponding to the response delay in accordance with the difference between the required intake manifold pressure PT and the estimated intake manifold pressure PE.

Furthermore, in step S540, it is determined whether or not the current period is a changing period of the combustion cylinder ratio $\gamma$. The changing period of the combustion cylinder ratio $\gamma$ refers to a period during which the throttle open degree TA is adjusted in accordance with the change of the combustion cylinder ratio $\gamma$. More specifically, the changing period of the combustion cylinder ratio $\gamma$ is a period from the above-described load ratio switch timing to a period during which the cylinder deactivation pattern corresponding to the combustion cylinder ratio $\gamma$ subsequent to the change is started.

When the current period is not the changing period of the combustion cylinder ratio (S540: NO), a predetermined base value KB is set to the value of a feedback gain K of feedback control of the throttle open degree TA in step S550. Then, the process is advanced to step S570. When the current period is the changing period of the combustion cylinder ratio (S540: YES), a predetermined high response value KH, which is greater than the base value, is set in step S560 as the value of the feedback gain K. Then, the process is advanced to step S570.

When the process is advanced to step S570, a drive current IT of the throttle valve 15 is calculated in step S570. Then, the process of the throttle control routine is ended. In the present embodiment, the product of the feedback gain K and the difference between the target throttle open degree TAT and the current throttle open degree TA is calculated as the value of the drive current IT.

Operation and Advantages of Present Embodiment

The operation and advantages of the present embodiment will now be described.

As described above, the engine controller 30 of the present embodiment performs an intermittent combustion operation and sets the combustion cylinder ratio of the engine 10 to be variable by changing the frequency of cylinder deactivation during the intermittent combustion operation. When the torque generated through the combustion of each cylinder is constant, the engine output during the intermittent combustion operation becomes larger as the cylinder deactivation frequency becomes lower and becomes smaller as the cylinder deactivation frequency becomes higher. Thus, when the cylinder deactivation is irregularly performed, the speed fluctuation of the engine 10 increases.

In the present embodiment, the intermittent combustion operation of the engine 10 in the variable control of the combustion cylinder ratio $\gamma$ is performed by repeating the cylinder deactivation in a pattern in which combustion is consecutively performed in N cylinders before the combustion of one cylinder is deactivated. The combustion cylinder ratio $\gamma$ is set to be variable by changing the value of the number (N) of cylinders in which combustion is consecutively performed in the cylinder deactivation pattern. In such a case, when the intermittent combustion operation is performed at a constant combustion cylinder ratio $\gamma$, cylinder deactivation is performed at a constant frequency. This reduces the speed fluctuation during the intermittent combustion operation.

Even in this case, when the combustion cylinder ratio $\gamma$ is changed, the frequency of cylinder deactivation changes. In the engine controller 30 of the present embodiment, the required load ratio KLT is calculated as a value that increases as the combustion cylinder ratio $\gamma$ decreases and that decreases as the combustion cylinder ratio $\gamma$ increases in a state in which the required torque (all-cylinder combustion request load ratio KLA) is constant. The throttle open degree TA is controlled so as to obtain an engine load ratio KL that corresponds to the required load ratio KLT. The engine load ratio KL increases as the throttle open degree TA increases in a state of normal operation in which the engine rotation speed NE is constant. Thus, in the present embodiment, when the combustion cylinder ratio $\gamma$ is changed, the throttle open degree TA is adjusted so that the open degree decreases as the value of the combustion cylinder ratio $\gamma$ is increased by the change and the open degree increases as the value of the combustion cylinder ratio $\gamma$ is decreased by the change.

In a case in which the torque generated by each combustion cylinder and the engine rotation speed NE are constant, the engine output becomes smaller as the combustion cylinder ratio $\gamma$ becomes smaller, and the engine output becomes larger as the combustion cylinder ratio $\gamma$ becomes larger. As described above, when the engine controller 30 of the present embodiment decreases the combustion cylinder ratio $\gamma$, the engine controller 30 increases the large throttle open degree TA to increase the torque generated in each combustion cylinder. Further, when the engine controller 30 increases the combustion cylinder ratio $\gamma$, the engine controller 30 decreases the throttle open degree TA to decrease the torque generated in each combustion cylinder. Thus, the speed fluctuation of the engine 10 can be reduced when the combustion cylinder ratio $\gamma$ is changed.

The torque generated in each combustion cylinder becomes larger as the amount of air drawn into the cylinder in the intake stroke (cylinder inflow air amount) becomes larger. In a case in which the engine rotation speed NE is constant, the cylinder inflow air amount becomes larger as the pressure of intake air (intake manifold pressure) becomes higher at the portion of the intake passage 12 located downstream of the throttle valve 15, and the cylinder inflow air amount becomes smaller as the intake manifold pressure becomes lower. When the intake valve 20 of each cylinder 11 is closed, the portion of the intake passage 12 located downstream of the throttle valve 15 is a closed space. Thus, when the operation for opening and closing the intake valve 20 is not performed, the intake manifold pressure can be increased but cannot be decreased.

In the present embodiment, when the value of the target combustion cylinder ratio $\gamma t$ is changed, the currently-executed cylinder deactivation pattern corresponding to the target combustion cylinder ratio $\gamma t$ prior to the change, which is the current combustion cylinder ratio $\gamma c$, is completed before the cylinder deactivation pattern corresponding to the target combustion cylinder ratio $\gamma t$ subsequent to the change is started from the beginning. Before the load ratio switch timing has elapsed, the value of the required load ratio KLT is calculated from the target combustion cylinder ratio $\gamma t$ prior to the change, which is the current combustion cylinder ratio $\gamma c$. After the load ratio switch timing has elapsed, the value of the required load ratio KLT is calculated from the target combustion cylinder ratio $\gamma t$ subsequent to the change. That is, the adjustment of the throttle open degree TA when changing the combustion cylinder ratio $\gamma$ as described above is started from the load ratio switch timing.

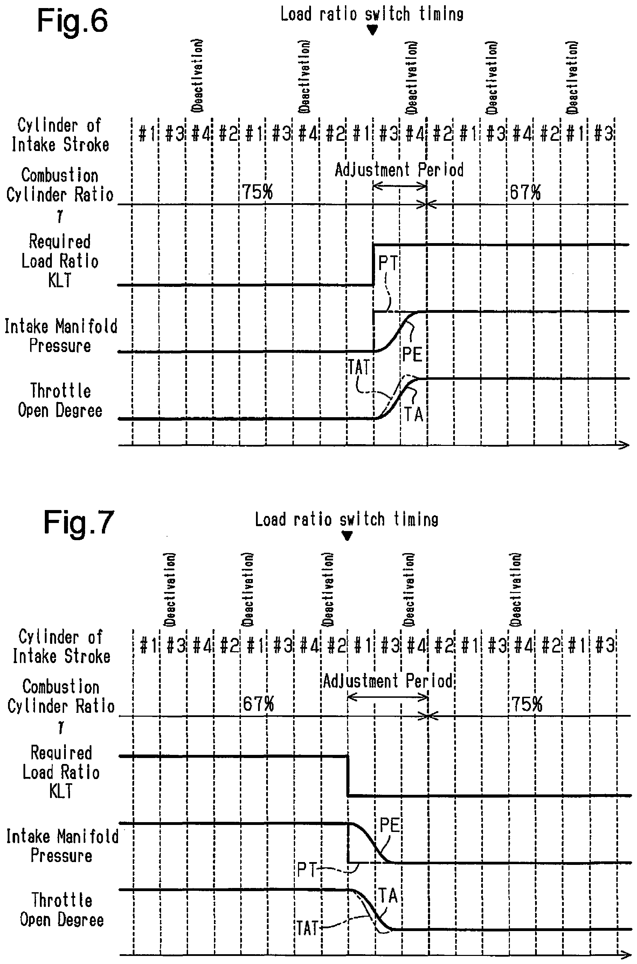

Fig. 6 shows how the combustion cylinder ratio $\gamma$ is decreased from 75% to 67% in the engine controller 30 of the present embodiment. In this case, when the combustion cylinder ratio $\gamma$ is decreased from 75% to 67%, the cylinder deactivation pattern is switched from a pattern in which combustion is consecutively performed in three cylinders before the combustion of one cylinder is deactivated to a pattern in which combustion is consecutively performed in two cylinders before the combustion of one cylinder is deactivated. When the combustion cylinder ratio $\gamma$ is changed from 75% to 67%, the value of the required load ratio KLT is increased. Thus, the throttle open degree TA is adjusted so that the open degree increases, that is, so that the intake manifold pressure increases.

In the present embodiment, when the combustion cylinder ratio is decreased, the load ratio switch timing is set to the intake top dead center (second timing) of a cylinder of which the ignition order is the first from the final cylinder in the currently-performed cylinder deactivation pattern. Thus, in this case, the adjustment period from when the throttle open degree TA starts to be adjusted to when the combustion cylinder ratio $\gamma$ is changed (the cylinder deactivation pattern is changed) includes two cylinder intake strokes. In the present embodiment, the end of the cylinder deactivation pattern is a deactivated cylinder in which the operation for opening and closing the intake valve 20 is stopped. Thus, the above-described adjustment period includes one cylinder intake stroke in which the operation for opening and closing the intake valve 20 is performed and one cylinder intake stroke in which the operation for opening and closing the intake valve 20 is stopped. As described above, the intake manifold pressure can be increased even when the operation for opening and closing the intake valve 20 is stopped. Thus, in this case, the entire adjustment period is used to adjust the engine load ratio KL in accordance with the change of the combustion cylinder ratio $\gamma$.

Fig. 7 shows how the combustion cylinder ratio $\gamma$ is decreased from 67% to 75% in the engine controller 30 of the present embodiment. In this case, when the combustion cylinder ratio $\gamma$ is decreased from 67% to 75%, the cylinder deactivation pattern is switched from a pattern in which combustion is consecutively performed in two cylinders before the combustion of one cylinder is deactivated to a pattern in which combustion is consecutively performed in three cylinders before the combustion of one cylinder is deactivated. When the combustion cylinder ratio $\gamma$ is changed from 67% to 75%, the value of the required load ratio KLT is decreased. Thus, the throttle open degree TA is adjusted so that the open degree increases, that is, so that the intake manifold pressure decreases.

In the present embodiment, when the combustion cylinder ratio is increased, the load ratio switch timing is set to the intake top dead center (first timing) of a cylinder of which the ignition order is the first from the final cylinder in the currently-performed cylinder deactivation pattern. Thus, in this case, the adjustment period from when the throttle open degree TA starts to be adjusted to when the combustion cylinder ratio $\gamma$ is changed (the cylinder deactivation pattern is changed) includes two cylinder intake strokes that involves the operation for opening and closing the intake valve 20 and one cylinder intake stroke in a state in which the operation for opening and closing the intake valve 20 is stopped. The intake manifold pressure cannot be decreased when the operation for opening and closing the intake valve 20 is stopped. Thus, in this case, the adjustment period includes a period during which the engine load ratio KL cannot be adjusted. However, in the present embodiment, when the value of the combustion cylinder ratio $\gamma$ increases, the adjustment of the throttle open degree TA is started at an earlier timing than when the value of the combustion cylinder ratio

γ decreases, lengthening the adjustment period of the engine load ratio KL (the torque generated in each combustion cylinder) in accordance with the change of the combustion cylinder ratio γ. Thus, the torque generated in each combustion cylinder corresponding to the change of the combustion cylinder ratio can be properly adjusted.

Such an adjustment of the throttle open degree TA when changing the combustion cylinder ratio γ requires a highly responsive throttle open degree control. When the responsiveness of a normal throttle open degree control is increased to adjust the torque of the engine 10, the torque may fluctuate due to hunting that results from excessive response and sudden change of the cylinder inflow air amount. Thus, in the present embodiment, only when the throttle open degree TA is adjusted in accordance with the change of the combustion cylinder ratio, the feedback gain K is set to be high in the feedback control of the throttle open degree TA.

In the above-described embodiment, the calculation processing circuit 31 of the engine controller 30 executes the target combustion cylinder ratio setting process P100, the cylinder deactivation pattern determination process P200, and the engine control process P300 to configure a combustion cylinder ratio control unit. Further, in the above-described embodiment, the calculation processing circuit 31 of the engine controller 30 executes the valve stopping control process P301 to configure a valve stopping control unit. Furthermore, in the above-described embodiment, the calculation processing circuit 31 of the engine controller 30 executes the request load ratio setting process P400 and the throttle control process P500 to configure a throttle control unit.

It should be apparent to those skilled in the art that the present disclosure may be embodied in many other specific forms. Particularly, it should be understood that the present disclosure may be embodied in the following forms.

In the above-described embodiment, the variable control of the combustion cylinder ratio is performed to achieve six types of combustion cylinder ratios γ, namely, 0%, 50%, 67%, 75%, 80%, and 100%. However, the variable control may be performed to achieve other combustion cylinder ratios γ. For example, when the intermittent combustion operation is performed to repeat a pattern in which combustion is consecutively performed in three cylinders before the combustion of two cylinders is deactivated, the combustion cylinder ratio γ becomes 60%. Even in this case, the intermittent combustion operation with the variable control is performed by repeating cylinder deactivation in a pattern in which combustion is consecutively performed in N cylinders before the combustion of M cylinders is deactivated (N and M being integers greater than or equal to 1). When the variable control is performed at the combustion cylinder ratio γ so as to change the value of at least one of N and M, cylinder deactivation is performed at a constant frequency while the intermittent combustion operation is performed at a constant combustion cylinder ratio γ. Thus, the speed fluctuation can be reduced during the intermittent combustion operation.

In the above-described embodiment, the feedback gain K in the feedback control of the throttle open degree TA is set to be higher when the throttle open degree TA is adjusted in accordance with the change of the combustion cylinder ratio γ than when the adjustment is not performed. Instead, as long as the responsiveness of the feedback control is not adversely affected, the feedback gain K may be fixed to a constant value.

In the above-described embodiment, the required load ratio KLT and the target throttle open degree TAT may be calculated in different manners.

In the above-described embodiment, the engine controller 30 does not have to be a device that includes a CPU and a ROM and executes software processing. For example, at least part of the processes executed by the software in the above-described embodiment may be executed by hardware circuits dedicated to executing these processes (such as ASIC). That is, the engine controller 30 may be modified as long as it has any one of the following configurations (a) to (c). (a) A configuration including a processor that executes all of the above-described processes according to programs and a program storage device such as a ROM that stores the programs. (b) A configuration including a processor and a program storage device that execute part of the above-described processes according to the programs and a dedicated hardware circuit that executes the remaining processes. (c) A configuration including a dedicated hardware circuit that executes all of the above-described processes. There may be one or more software processing circuits each including a processor and a program storage device and one or more dedicated hardware circuits. That is, the above processes may be executed in any manner as long as the processes are executed by processing circuitry that includes at least one of a set of one or more software processing circuits and a set of one or more dedicated hardware circuits.

Therefore, the present examples and embodiments are to be considered as illustrative and not restrictive and the disclosure is not to be limited to the details given herein, but may be modified within the scope and equivalence of the appended claims.

**Claims**

**1.** An engine controller (30) configured to control an engine (10), the engine (10) including

cylinders (11),
an intake passage (12) through which intake air flowing into the cylinders (11) flows,

a throttle valve (15) arranged in the intake passage (12),
an intake valve (20) arranged in each of the cylinders (11), and
a valve stopping mechanism (22, 23) capable of stopping an operation for opening and closing the intake valve (20) in each of the cylinders (11),
the engine controller (30) comprising:

    a combustion cylinder ratio control unit configured to:

        perform an intermittent combustion operation with a combustion cylinder ratio set to N/(N + M) by repeating cylinder deactivation in a pattern in which combustion is consecutively performed in N cylinders before combustion is consecutively deactivated in M cylinders, wherein N and M are integers greater than or equal to 1; and
        variably control the combustion cylinder ratio so that a value of at least one of N and M changes;

    a valve stopping control unit configured to control the valve stopping mechanism (22, 23) so as to stop the operation for opening and closing the intake valve (20) of a cylinder (11) in which combustion is deactivated in the intermittent combustion operation; and
    a throttle control unit configured to adjust, in a case in which the combustion cylinder ratio is changed by the combustion cylinder ratio control unit, a throttle open degree that is an open degree of the throttle valve (15) so that the open degree decreases when the value of the combustion cylinder ratio is increased by the change and the open degree increases when the value of the combustion cylinder ratio is decreased by the change,

    **characterized in that** the throttle control unit is configured to start adjusting the throttle open degree in accordance with the change of the combustion cylinder ratio at an earlier timing when the value of the combustion cylinder ratio is increased by the change than when the value of the combustion cylinder ratio is decreased by the change.

2. The engine controller (30) according to claim 1, wherein

    the throttle control unit is configured to calculate a required load ratio that is a required value of an engine load ratio, which is a ratio of a current cylinder inflow air amount to a cylinder inflow air amount when the throttle valve (15) is fully open at a current engine rotation speed, in accordance with the combustion cylinder ratio to reduce a change in engine output resulting from the change in combustion cylinder ratio and control the throttle open degree in accordance with the required load ratio, and
    the throttle control unit is configured to, in a case in which the combustion cylinder ratio is changed by the combustion cylinder ratio control unit, set an earlier timing of switching the value of the combustion cylinder ratio, which is used for calculation of the required load ratio, from a value prior to the change to a value subsequent to the change when the value of the combustion cylinder ratio is increased by the change than when the value of the combustion cylinder ratio is decreased by the change.

3. The engine controller (30) according to claim 1 or 2, wherein the throttle control unit is configured to set a higher feedback gain in a feedback control of the throttle open degree when adjusting the throttle valve (15) in accordance with the change of the combustion cylinder ratio than when not adjusting the throttle valve (15) in accordance with the change of the combustion cylinder ratio.

**Patentansprüche**

1. Motorsteuergerät (30), das dazu ausgestaltet ist, einen Motor (10) zu steuern, wobei der Motor (10) umfasst:

    Zylinder (11),
    einen Ansaugkanal (12), durch den in die Zylinder (11) strömende Ansaugluft strömt,
    eine Drosselklappe (15), die in dem Ansaugkanal (12) angeordnet ist,
    ein Ansaugventil (20), das in jedem der Zylinder (11) angeordnet ist, und
    einen Ventilstoppmechanismus (22, 23), der in der Lage ist, einen Vorgang zum Öffnen und Schließen des Ansaugventils (20) in jedem der Zylinder (11) zu stoppen,
    wobei das Motorsteuergerät (30) umfasst:

eine Verbrennungszylinderverhältnis-Steuereinheit, die ausgestaltet ist zum:

Durchführen eines intermittierenden Verbrennungsvorgangs mit einem auf N/(N + M) eingestellten Verbrennungszylinderverhältnis, indem eine Zylinderdeaktivierung in einem Muster wiederholt wird, bei dem eine Verbrennung nacheinander in N Zylindern durchgeführt wird, bevor eine Verbrennung in M Zylindern nacheinander deaktiviert wird, wobei N und M ganze Zahlen sind, die größer als oder gleich 1 sind, und

variablen Steuern des Verbrennungszylinderverhältnisses, so dass sich ein Wert von mindestens einem von N und M ändert,

eine Ventilstopp-Steuereinheit, die dazu ausgestaltet ist, den Ventilstoppmechanismus (22, 23) zu steuern, um den Vorgang zum Öffnen und Schließen des Einlassventils (20) eines Zylinders (11) zu stoppen, bei dem eine Verbrennung in dem intermittierenden Verbrennungsvorgang deaktiviert wird, und

eine Drosselsteuereinheit, die dazu ausgestaltet ist, in einem Fall, in dem das Verbrennungszylinderverhältnis durch die Verbrennungszylinderverhältnis-Steuereinheit geändert wird, einen Drosselöffnungsgrad einzuregeln, der ein Öffnungsgrad der Drosselklappe (15) ist, so dass der Öffnungsgrad abnimmt, wenn der Wert des Verbrennungszylinderverhältnisses durch die Änderung erhöht wird, und der Öffnungsgrad sich erhöht, wenn der Wert des Verbrennungszylinderverhältnisses durch die Änderung verringert wird,

**dadurch gekennzeichnet, dass** die Drosselsteuereinheit dazu ausgestaltet ist, den Drosselöffnungsgrad in Übereinstimmung mit der Änderung des Verbrennungszylinderverhältnisses zu einem früheren Zeitpunkt einzuregeln, wenn der Wert des Verbrennungszylinderverhältnisses durch die Änderung erhöht wird, als wenn der Wert des Verbrennungszylinderverhältnisses durch die Änderung verringert wird.

2. Motorsteuergerät (30) nach Anspruch 1, wobei

die Drosselsteuereinheit dazu ausgestaltet ist, ein erforderliches Lastverhältnis, das ein erforderlicher Wert eines Motorlastverhältnisses ist, das ein Verhältnis einer aktuellen Zylindereinströmluftmenge zu einer Zylindereinströmluftmenge ist, wenn die Drosselklappe (15) bei einer aktuellen Motordrehzahl vollständig geöffnet ist, in Übereinstimmung mit dem Verbrennungszylinderverhältnis zu berechnen, um eine Änderung der Motorleistung infolge der Änderung des Verbrennungszylinderverhältnisses zu verringern und den Drosselöffnungsgrad in Übereinstimmung mit dem erforderlichen Lastverhältnis zu steuern, und

die Drosselsteuereinheit dazu ausgestaltet ist, in einem Fall, in dem das Verbrennungszylinderverhältnis durch die Verbrennungszylinderverhältnis-Steuereinheit geändert wird, einen früheren Zeitpunkt für das Umschalten des Werts des Verbrennungszylinderverhältnisses, der zur Berechnung des erforderlichen Lastverhältnisses verwendet wird, von einem Wert vor der Änderung zu einem Wert nach der Änderung einzustellen, wenn der Wert des Verbrennungszylinderverhältnisses durch die Änderung erhöht wird, als wenn der Wert des Verbrennungszylinderverhältnisses durch die Änderung verringert wird.

3. Motorsteuergerät (30) nach Anspruch 1 oder 2, wobei die Drosselsteuereinheit dazu ausgestaltet ist, eine höhere Rückkopplungsverstärkung in einer Rückkopplungssteuerung des Drosselöffnungsgrads einzustellen, wenn die Drosselklappe (15) in Übereinstimmung mit der Änderung des Verbrennungszylinderverhältnisses eingeregelt wird, als wenn die Drosselklappe (15) nicht in Übereinstimmung mit der Änderung des Verbrennungszylinderverhältnisses eingeregelt wird.

**Revendications**

1. Dispositif de commande de moteur (30) configuré pour commander un moteur (10), le moteur (10) comprenant

des cylindres (11),
un passage d'admission (12) à travers lequel s'écoule de l'air d'admission s'écoulant dans les cylindres (11),
un papillon des gaz (15) disposé dans le passage d'admission (12),
une soupape d'admission (20) disposée dans chacun des cylindres (11), et
un mécanisme d'arrêt de soupape (22, 23) capable d'arrêter une opération d'ouverture et de fermeture de la soupape d'admission (20) dans chacun des cylindres (11),
le dispositif de commande de moteur (30) comprenant :

une unité de commande de rapport de cylindres de combustion configurée pour :

réaliser une opération de combustion intermittente avec un rapport de cylindres de combustion établi à N/(N + M) en répétant une désactivation de cylindres suivant une séquence dans laquelle la combustion est réalisée de manière consécutive dans N cylindres avant que la combustion soit désactivée de manière consécutive dans M cylindres, N et M étant des nombres entiers supérieurs ou égaux à 1 ; et commander de manière variable le rapport de cylindres de combustion de telle sorte qu'une valeur de au moins un de N et M change ;

une unité de commande d'arrêt de soupape configurée pour commander le mécanisme d'arrêt de soupape (22, 23) de façon à arrêter l'opération d'ouverture et de fermeture de la soupape d'admission (20) d'un cylindre (11) dans lequel la combustion est désactivée dans l'opération de combustion intermittente ; et une unité de commande de papillon des gaz configurée pour ajuster, dans un cas dans lequel le rapport de cylindre de combustion est changé par l'unité de commande de rapport de cylindres de combustion, un degré d'ouverture de papillon des gaz qui est un degré d'ouverture du papillon des gaz (15) de telle sorte que le degré d'ouverture diminue quand la valeur du rapport de cylindres de combustion est augmentée par le changement et le degré d'ouverture augmente quand la valeur du rapport de cylindres de combustion est diminuée par le changement,

**caractérisé en ce que** l'unité de commande de papillon des gaz est configurée pour commencer à ajuster le degré d'ouverture de papillon des gaz en fonction du changement du rapport de cylindres de combustion à un moment plus avancé quand la valeur du rapport de cylindres de combustion est augmentée par le changement que quand la valeur du rapport de cylindres de combustion est diminuée par le changement.

2. Dispositif de commande de moteur (30) selon la revendication 1, dans lequel

l'unité de commande de papillon des gaz est configuré pour calculer un rapport de charge exigé qui est une valeur exigée d'un rapport de charge de moteur, qui est un rapport d'une quantité d'air d'écoulement d'entrée de cylindre courante sur une quantité d'air d'écoulement d'entrée de cylindre quand le papillon des gaz (15) est entièrement ouvert à une vitesse de rotation de moteur courante, en fonction du rapport de cylindres de combustion pour réduire un changement de puissance moteur résultant du changement du rapport de cylindres de combustion et commander le degré d'ouverture de papillon des gaz en fonction du rapport de charge exigé, et l'unité de commande de papillon des gaz est configurée pour, dans un cas dans lequel le rapport de cylindres de combustion est changé par l'unité de commande de rapport de cylindres de combustion, établir un moment plus avancé de commutation de la valeur du rapport de cylindre de combustion, qui est utilisé pour le calcul du rapport de charge exigé, d'une valeur avant le changement à une valeur à la suite du changement quand la valeur du rapport de cylindres de combustion est augmentée par le changement que quand la valeur du rapport de cylindre de combustion est diminuée par le changement.

3. Dispositif de commande de moteur (30) selon la revendication 1 ou 2, dans lequel l'unité de commande de papillon des gaz est configurée pour établir un gain de rétroaction plus élevé dans une commande de rétroaction du degré d'ouverture de papillon des gaz lors de l'ajustement du papillon des gaz (15) en fonction du changement du rapport de cylindres de combustion que lorsqu'il n'y a pas d'ajustement du papillon des gaz (15) en fonction du changement du rapport de cylindres de combustion.

# Fig.1

# Fig.2

# Fig.3

# Fig.4

# Fig.5

```
        ┌─────────────────────────┐
        │  Throttle control routine │
        └─────────────────────────┘
                    │
                    ▼
        ┌─────────────────────────┐
        │  Calculate required intake │ ～S500
        │    manifold pressure PT    │
        └─────────────────────────┘
                    │
                    ▼
        ┌─────────────────────────┐
        │ Calculate estimated throttle │ ～S510
        │     open degree TAE       │
        └─────────────────────────┘
                    │
                    ▼
        ┌─────────────────────────┐
        │  Calculate estimated intake │ ～S520
        │    manifold pressure PE    │
        └─────────────────────────┘
                    │
                    ▼
        ┌─────────────────────────┐
        │  Calculate target throttle │ ～S530
        │     open degree TAT       │
        └─────────────────────────┘
                    │
                    ▼
               ╱────────────╲  ～S540
              ╱   Changing    ╲
             ╱ period of combustion ╲──── NO
             ╲   cylinder ratio?    ╱
              ╲                    ╱
               ╲──────────────────╱
                    │ YES                      │
                    ▼         ～S560            ▼        ～S550
        ┌─────────────────────────┐   ┌─────────────────┐
        │       K←KH (>KB)         │   │      K←KB        │
        └─────────────────────────┘   └─────────────────┘
                    │◄─────────────────────────┘
                    ▼
        ┌─────────────────────────┐
        │ Drive current←(TAT-TA)×K │ ～S570
        └─────────────────────────┘
                    │
                    ▼
        ┌─────────────────────────┐
        │     Process is ended      │
        └─────────────────────────┘
```

# Fig.6

Load ratio switch timing ▼

| Cylinder of Intake Stroke | #1 #3 #4 #2 #1 #3 #4 #2 #1 #3 #4 #2 #1 #3 #4 #2 #1 #3 |

(Deactivation) (Deactivation) (Deactivation) (Deactivation) (Deactivation)

Combustion Cylinder Ratio τ
75%
Adjustment Period
67%

Required Load Ratio KLT
PT

Intake Manifold Pressure
TAT
PE

Throttle Open Degree
TA

# Fig.7

Load ratio switch timing ▼

| Cylinder of Intake Stroke | #1 #3 #4 #2 #1 #3 #4 #2 #1 #3 #4 #2 #1 #3 #4 #2 #1 #3 |

(Deactivation) (Deactivation) (Deactivation) (Deactivation) (Deactivation)

Combustion Cylinder Ratio τ
67%
Adjustment Period
75%

Required Load Ratio KLT

Intake Manifold Pressure
PE
PT

Throttle Open Degree
TA
TAT

**EP 3 524 803 B1**

## REFERENCES CITED IN THE DESCRIPTION

### Patent documents cited in the description

- US 9200575 B
- JP 2005105869 A

- US 2016053697 A1